# EUROPEAN PATENT SPECIFICATION

(11) **EP 1 897 790 B1**
(45) Date of publication and mention of the grant of the patent: **17.03.2010**
(21) Application number: 07017462.8
(22) Date of filing: 06.09.2007
(51) Int. Cl.: B62D 53/08, B62D 13/04

(54) **Device for coupling a towed vehicle to a towing vehicle, as well as a vehicle combination**
Vorrichtung zur Kopplung eines zu schleppenden Fahrzeugs an ein Schleppfahrzeug sowie Fahrzeugkombination
Dispositif de couplage d'un véhicule dépanné sur un véhicule de dépannage, ainsi qu'une combinaison de véhicule

(30) Priority: 11.09.2006 NL 1032472
(43) Date of publication of application: 12.03.2008
(73) Proprietor: Transport Industry Development Centre B.V., 5692 GA Son en Breugel (NL)
(72) Inventor: Van Genugten, Antonius Jacobus, 5298 VK Liempde (NL); Smits, Stef Leonardus Maria, 5476 KD Vorstenbosch (NL)
(74) Representative: Dorna, Peter

(56) References cited:
- EP-A2- 1 466 813
- CA-A1- 1 183 182
- US-B1- 6 450 523

## Description

The present invention relates to a device for coupling a towed vehicle to a towing vehicle, comprising a frame, at least one wheel pair for moving the device, the wheels of said at least one wheel pair are of the steering type, a drawbar assembly which can be pivotally coupled to the towing vehicle about a first vertical pivot axis on the one hand and which is pivotally connected to the frame about a second vertical pivot axis on the other hand, as well as a coupling plate for pivotally coupling the towed vehicle to the device about a third vertical pivot axis, in which device means are provided for causing the wheels of the steering type to be steered in dependence on the pivoted position of the drawbar assembly about the second vertical pivot axis with respect to the frame.

Such devices are used with so-called Long and Heavy Vehicles (LHVs), which usually have an overall, relatively great length of maximally 25.25 m. Such LHVs consist of a truck and one or even two trailers. The required coupling between the truck and said one or two trailers can be realised by means of devices as referred to in the introduction, which devices are also referred to as "dollies" in technical jargon.

At the time of the present invention an experimental project with such vehicles has been started in the Netherlands. The aim is in particular to reduce the transport costs and to limit the burden on the environment. An important drawback of LHVs is their limited manoeuvrability, precisely because of their relatively great length and, in conjunction therewith, the road safety risks the use of such LHVs involves. The limited manoeuvrability manifests itself in a relatively large turning circle of LHVs, which is for example objectionable at (smaller) roundabouts. It is (partially) for the above reasons that the Dutch authorities decided to permit only a limited number of LHVs to take part in the experimental project, and that on a limited number of motorway routes. LHVs are also being used in other countries, whether or not within the framework of an experimental project.

To overcome the above drawback regarding the limited manoeuvrability, European patent EP-A2-1 466 813 proposes to use a two-axle dolly, a drawbar assembly of which is pivotable about a vertical pivot axis with respect to a frame at the rear end thereof. Behind said pivot axis, a turntable, which is known per se, is provided for being coupled with the kingpin of a trailer, thus realising a pivotable coupling between the dolly and the trailer. The associated pivot axis is located behind the pivot axis between the drawbar assembly and the frame. At its front end the drawbar assembly is provided with an eye for being coupled with a coupling pin at the rear side of the towing vehicle, for example a truck. In total there are three pivot axes, which make it possible to realise a small turning circle. Unfortunately it has become apparent in practice, however, that the use of three such pivot axis leads to an unstable road behaviour, so that there is a risk that the trailer will not track well behind the truck, for example due to the presence of ruts in the road surface. All this requires greater skill on the part of the driver and constitutes a road safety hazard. The wheels of the front axle of the dolly steer in dependence on the pivoted position of the drawbar assembly, and optionally also in dependence on the speed of the dolly. To that end two pneumatic cylinders are provided, whose position can be adjusted by means of a steering mechanism. The position of the pneumatic cylinders determines the steering characteristic. Possible failure of one of the pneumatic cylinders will lead to an overdefined situation as far as the mechanical transmission between the drawbar and the wheels of the front axle is concerned, which may result in an uncontrolled steering characteristic. Another significant drawback of the drawbar assembly according to EP 1 466 813 A2 is that in practice the towed vehicle does not always track well behind the towing vehicle, for example after a turn, in particular if the weight of the towed vehicle is comparatively large.

The object of the present invention is to solve or at least alleviate the aforesaid problems. In order to accomplish that object, the device according to the invention is characterised in that reset means are provided, which reset means act between the frame and the drawbar assembly and act directly on the drawbar assembly for causing the drawbar assembly to pivot back about the second vertical axis from a non-neutral position to a neutral position. In this way a significant improvement as regards the stability of the road behaviour and the tracking of the towed vehicle behind the towing vehicle is realised.

For reasons of constructional simplicity it is preferable if the reset means comprise at least one cylinder, more preferably at least two cylinders acting in opposite directions.

It is advantageous in that regard if only one of said at least two cylinders acts between the frame and the drawbar assembly in a non-neutral position. This has the advantage that the cylinders can take up an extreme position in the neutral position of the drawbar assembly.

According to another preferred embodiment, the reset means operate on the basis of pneumatic pressure. Said pneumatic pressure can be generated by means that are available as standard on the towing vehicle.

In a preferred embodiment, which is very advantageous because of its constructional simplicity, the reset means comprise an air bellows and/or at least one rod which is pivotally connected to the drawbar assembly by means of a pin-slot connection.

To reduce the turning circle, the wheels of said at least one wheel pair are of the steering type.

A very good control of the steered wheels is obtained as means are provided for causing the wheels of the steering type to be steered in dependence on the pivoted position of the drawbar assembly about the second vertical pivot axis with respect to the frame.

To make it easier to reverse a vehicle that is provided with a device according to the invention, it is preferable if locking means are provided for locking the drawbar assembly in the neutral position.

Another, very advantageous preferred embodiment is characterised in that the second vertical pivot axis and the third vertical pivot axis coincide. Because the second pivot axis and the third pivot axis coincide, an improved road behaviour is obtained, but it is nevertheless still possible to have the towing vehicle, the drawbar assembly, the frame and the towed vehicle take up different pivoted positions with respect to each other, because they are not rigidly coupled. In this way it is possible to realise comparatively small turning circles.

The invention further relates to a vehicle combination comprising a towing vehicle, a towed vehicle and a coupling device for coupling the towed vehicle to the towing vehicle, which coupling device is according to the invention configured in the manner as described above, including its concomitant advantages.

The invention will now be explained in more detail by means of a description of a preferred embodiment, in which reference is made to the following figures.
Figure 1 is a schematic top plan view of a first preferred embodiment of a vehicle combination according to the invention, which is provided with a first preferred embodiment of a coupling device according to the invention (in the neutral position thereof);
Figures 2a and 2b are schematic top plan views of the coupling device of figure 1, which show said device in the neutral position and in the non-neutral position, respectively;
Figure 3 is a schematic side view of the coupling device according to figure 1 (in the neutral position);
Figures 4a and 4b are schematic bottom plan views of the coupling device of figure 1, which show said device in the neutral position and in the non-neutral position, respectively;
Figure 5 is a schematic top plan view of the vehicle combination of figure 1 during a turn;
Figures 6a and 6b are schematic bottom plan views of a second preferred embodiment of a coupling device according to the invention, which show said device in the neutral position and in the non-neutral position, respectively; and
Figure 7 is a schematic side view of the coupling device according to figure 6a (in the neutral position thereof).

The various parts are shown in transparent view in the figures, so that the parts positioned behind said parts are also shown.

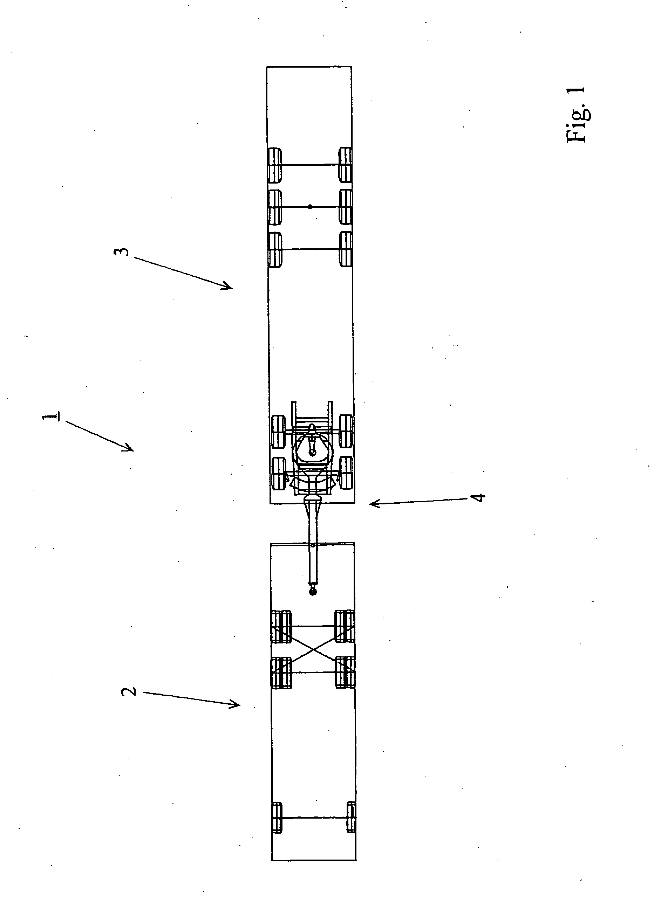

Figure 1 shows a vehicle combination 1, more specifically a tractor-trailer combination, the tractor being configured as a truck 2 and the trailer being configured as a three-axled trailer. The trailer 3 is coupled to the truck 2 by means of a coupling device, hereinafter called dolly 4.

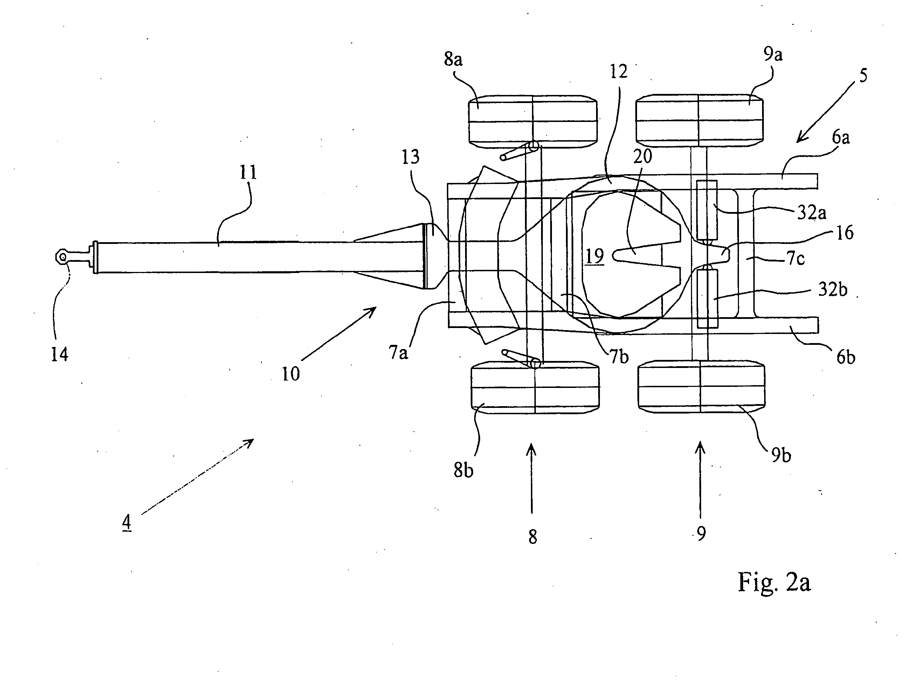

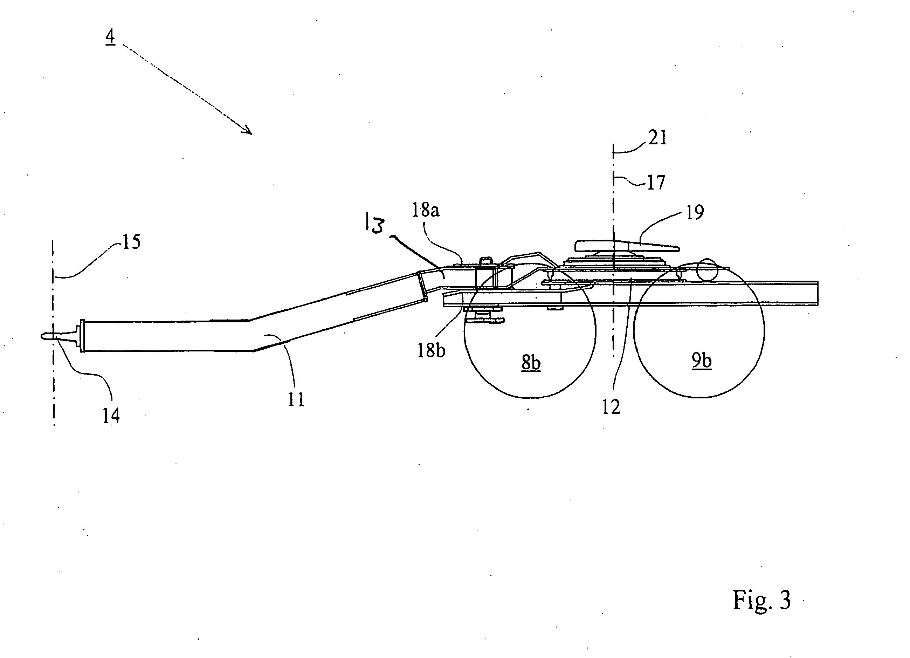

Figures 2a, 3 and 4a show the dolly 4 in more detail. The dolly 4 comprises a frame 5 with longitudinal girders 6a, 6b and cross beams 7a, 7b, 7c. The dolly 4 further comprises two wheel pairs 8, 9 with wheels 7a, 8b and 9a, 9b, respectively. The dolly further comprises a drawbar assembly 10, which is at least substantially made up of a drawbar member 11 at the front of the frame 5, a drawbar disc 12 and a coupling member 13 (also refer to figure 3), which forms the connection between the drawbar member and the drawbar disc 12.

The drawbar member 11 has a cranked shape, seen in the vertical plane, and is provided with a coupling eye 14 at the front side, which is to mate with a coupling pin (not shown in detail) forming part of the truck 2 at the rear side thereof. When the truck 2 and the drawbar member 11 are coupled in this manner, they can pivot relative to each other about a vertical pivot axis 15 extending through the centre of the coupling eye 14.

The drawbar disc 12 is substantially disc-shaped, the diameter of which disc shape being substantially equal to the width of the frame 5. At its rear side, the disc shape of the drawbar plate blends into a projecting stop edge 16 between the rear wheels 9a, 9b. The drawbar disc 12, and thus the entire drawbar assembly 10, is pivotally supported about the vertical pivot axis 17 with respect to the frame 5. To enable said pivoting, the dolly 4 is provided with a horizontal guide 18, which substantially comprises two arcuate guide plates 18a and 18b positioned one above the other, between which a part of the coupling member 13 is positioned for guiding cooperation with the upper side and the bottom side, respectively, of the coupling member 13.

The dolly 4 furthermore comprises a coupling plate 19 provided with a wedge-shaped slot 20, which is disposed above the drawbar disc 12. Via said coupling plate 19, the trailer 3 can be coupled with the dolly 4, with a pin (not shown), usually referred to as kingpin, being retained in the front end of the slot 20 by means of a safety catch. Such a connection enables the trailer 3 to pivot about the vertical pivot axis 21, which coincides with the central axis of the kingpin, with respect to the coupling plate 19 and/or to pivot jointly with the coupling plate 19 about said vertical pivot axis 21 with respect to the frame 5. The vertical pivot axis 21 coincides with the vertical pivot axis 17 for the drawbar assembly 10. The coupling plate 19 is in principle rigidly connected either to the frame 5 or to the drawbar disc 12, but it may also be pivotally connected to the frame 5 or to the drawbar disc 12 about a pivot axis that coincides with the pivot axis 21.

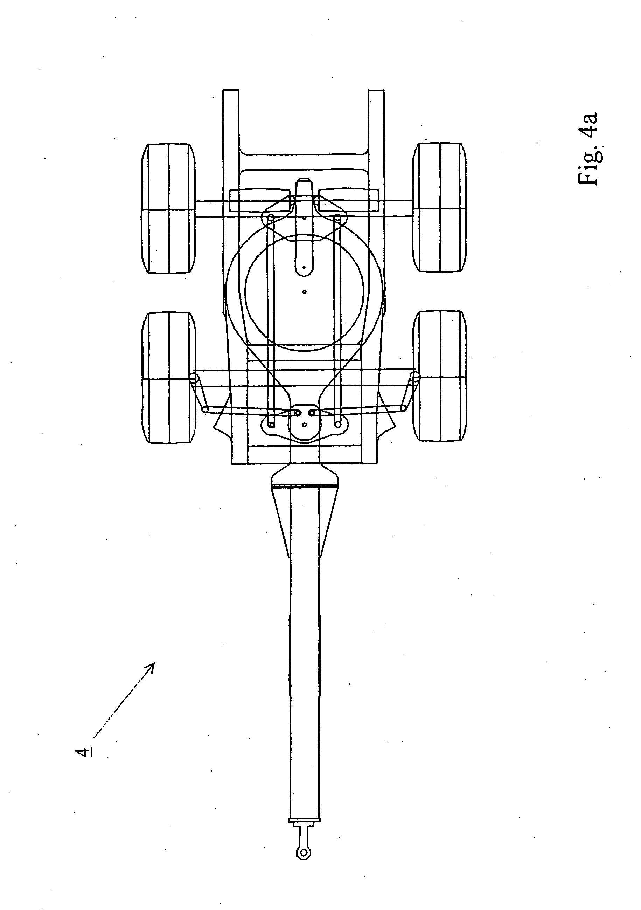

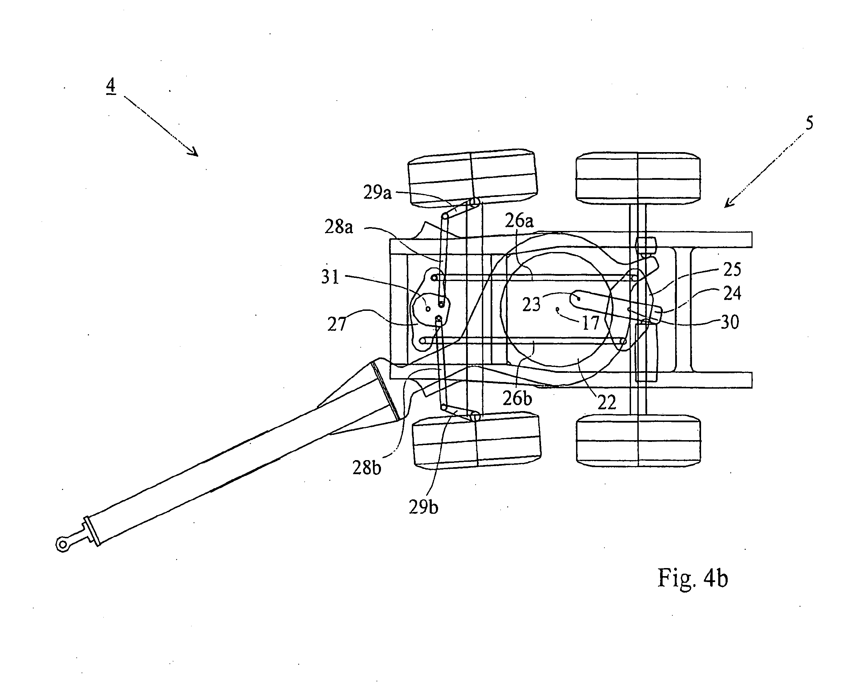

At the bottom side, the dolly 4 is provided with a steering mechanism for steering the front wheels 8a, 8b in dependence on the pivoted position of the drawbar assembly 10 about the pivot axis 17 with respect to the frame 5. The steering mechanism is shown in figures 4a and 4b, and the operation of said mechanism will become clear upon comparing figures 4a and 4b. In order of kinematic structure, the steering mechanism comprises: a sliding rod 24 which is movable in its longitudinal direction within a sliding member 25, steering rods 26a, 26b, a composite transmission element 27, track rods 28a, 28b and steering levers 29a, 29b, which are rigidly connected to the axles of the respective wheels 8b, 8a. The sliding member 25 is pivotally supported (together with the sliding rod 24) with respect to the frame 5 about a vertical axis 30. At its front end, the sliding rod 24 is pivotally connected to the drawbar disc 12 about a pivot axis 23. The steering rods 26a, 26b are pivotally connected to the sliding member 25 and the transmission element 27 at their ends. The track rods 28a, 28b are pivotally connected to the steering levers 29a, 29b at one end and to the transmission element 27 at the opposite end. The transmission element 27 is pivotally supported about a vertical pivot axis 31 with respect to the frame 5.

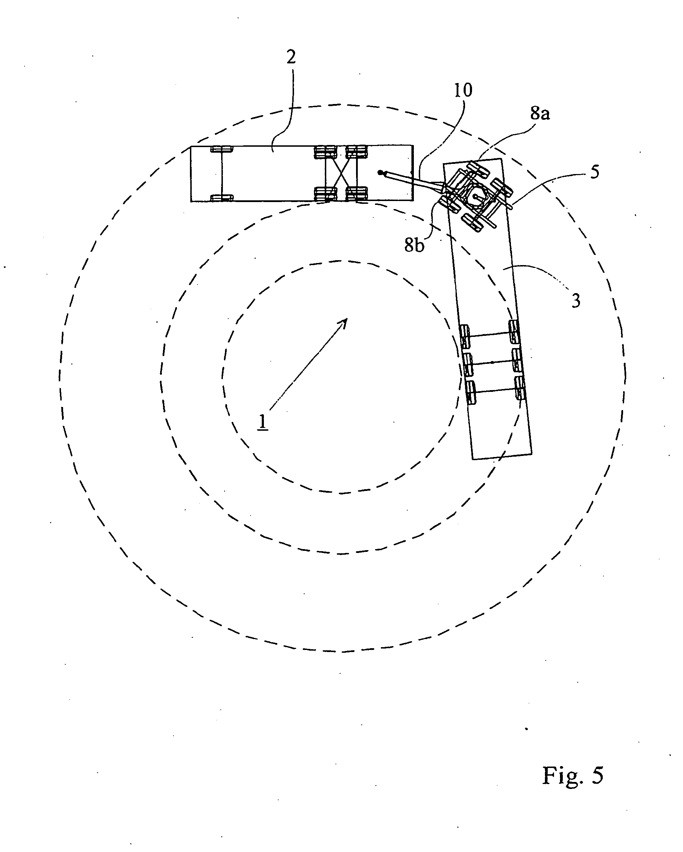

Figure 5 shows how a vehicle combination 1 takes a turn, more specifically it shows the pivoted positions which the truck 1, the drawbar assembly 10, the frame 5 and the trailer successively take up with respect to each other. The figure also shows how the front wheels 8a, 8b take up a steering (non-neutral) position as a result of the action of the steering mechanism described above with reference to figures 4a and 4b. Because of the aforesaid pivoted positions, the vehicle combination 1 has a comparatively small turning circle, which effect is enhanced by the steered front wheels 8a, 8b. Because the pivot axes 17 and 21 coincide, the vehicle combination will exhibit a stable steering behaviour, and the trailer 3 will exhibit a stronger tendency to track well behind the truck 2.

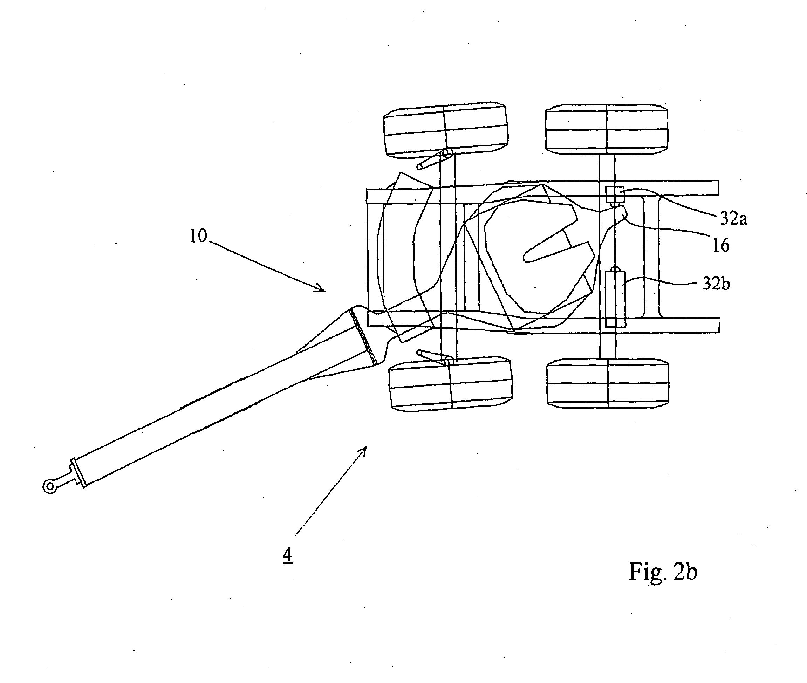

The latter effect is further enhanced by using two cylinders 32a and 32b, which are disposed directly opposite each other at the location of the stop edge 16. At their end remote from the stop edge, the cylinders 32a, 32b are connected to the longitudinal girders 6a, 6b, respectively, of the frame 5. At the other end, the cylinders 32a, 32b abut against the side edge of the stop edge 16 that faces towards the cylinder 32a, 32b in question in the neutral position of the drawbar assembly 10 that is shown in figure 2a. As soon as pivoting of the drawbar assembly 10 about the pivot axis 17 with respect to the frame 5 causes the drawbar assembly to move to a position different from said neutral position, which happens when swerving or taking a turn, for example, one of the cylinders 32a, 32b (cylinder 32a in figure 2b) is made to contract, with the cylinder 32a, 32b in question forming a resistance (reset moment) to inhibit further movement in a direction away from the neutral position. The contracted cylinder 32a, 32b in question will attempt to urge the drawbar assembly 10 back to its neutral position again. The length of the other cylinder 32a, 32b (cylinder 32b in figure 2b) does not change, and consequently said cylinder does not exert a force that opposes the pivoting of the drawbar assembly 10 from the neutral position. The action of the cylinders 32a, 32b, which may be hydraulic or pneumatic cylinders for that matter, additionally enhances the stability of the steering behaviour, which manifests itself in, for example, an accelerated return to the neutral position of the drawbar assembly 10 after the vehicle combination 1 has taken a turn.

Alternatively it is also possible within the framework of the present invention to generate the reset force mechanically rather than hydraulically/pneumatically by substituting the cylinders 32a, 32b for (preferably identical) springs, which are connected to the longitudinal girders 6a, 6b at one end (just like the cylinders 32a, 32b) and to the stop edge 16 at their other end. Depending on any bias in the springs, which bias is present in the neutral position of the drawbar assembly 10, the spring tension (tension or compression) is used to induce the drawbar assembly 10 to take up its neutral position again.

It stands to reason that the forces that are exerted on the drawbar assembly 10 within the framework of the present invention to make the drawbar assembly return to its neutral position are not so large that they make it more difficult to take turns, or in general interfere with the movement of the drawbar assembly 10 in a direction away from the neutral position at moments when this is desirable. On the other hand, said forces must be large enough to have a noticeable accelerating effect on the return of the drawbar assembly 10 from a non-neutral position to the neutral position.

To make it easier to reverse the vehicle combination 1, it is advantageous if the drawbar assembly 10 can be locked in the neutral position, for example by using a pin-hole coupling as described in EP-A2-1 466 813. Alternatively it is also possible, however, to use the cylinders 32a, 32b for this purpose, which is done by increasing the pressure in said cylinders temporarily.

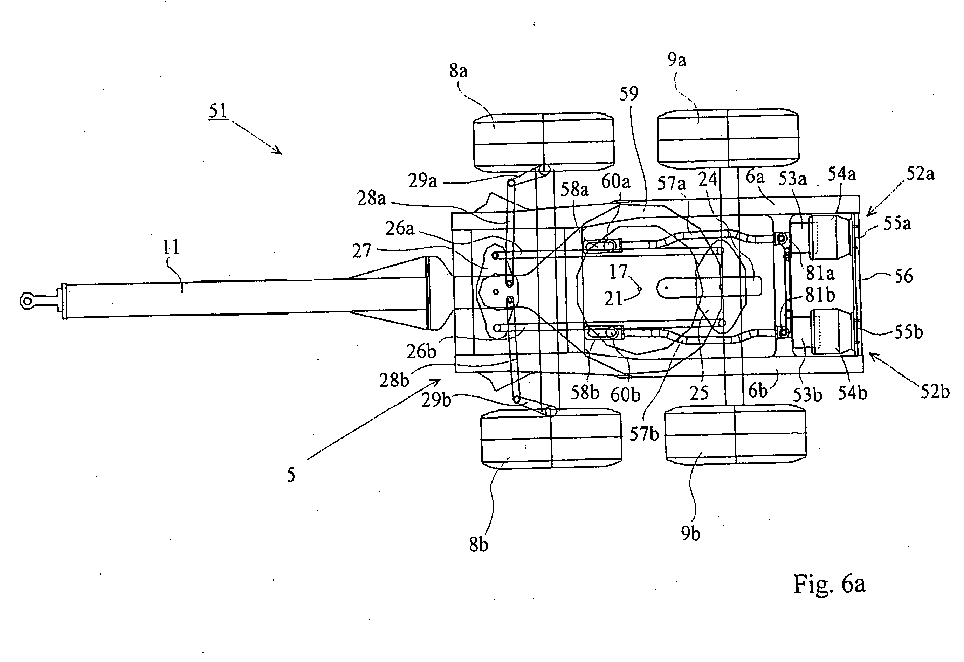

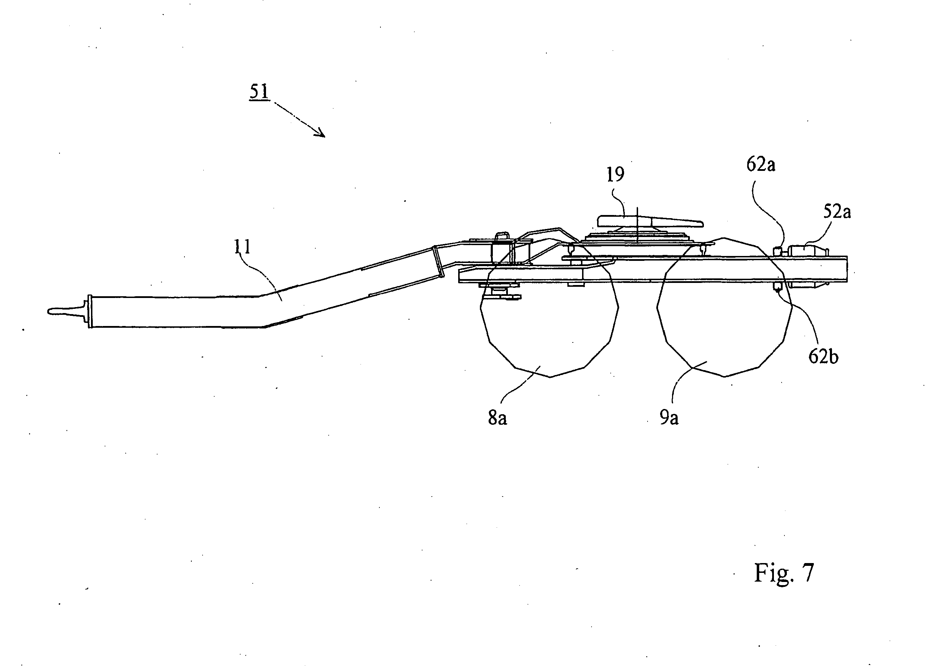

Figures 6a-7 relate to a dolly 51 according to a second preferred embodiment of the invention. The dolly 51 is to a large extent identical to the dolly 4. Consequently, corresponding parts are indicated by the same numerals for easy reference. For a more detailed explanation of the parts in question, reference is made to the preceding description of the dolly 4.

The dolly 51 and the dolly 4 are different from each other in that different measures have been taken to ensure that a semitrailer 3 will track well behind a truck 2 also after taking a turn. As is the case with the dolly 4, the pivot axes 17 and 21 coincide with the dolly 51. The dolly 51, on the other hand, does not use cylinders 32a and 32b, which act in opposite directions on the stop edge 16, as is the case with the dolly 4, but it makes use of air bellows 52a, 52b. The air bellows 52a, 52b, which are known to those skilled in the art, comprise a pot body 53a, 53b, respectively, and a flexible bellows body 54a, 54b, respectively. The air bellows 52a, 52b are each connected to the pneumatic pressure circuit of the truck 2, with a pressure of, for example, about 5 bar prevailing in the air bellows 52a, 52b during normal use. In a neutral position as shown in figure 6a, the pot bodies 53a, 53b extend within the bellows bodies 54a, 54 along a limited portion of their axial length. The bellows bodies 54a, 54b each comprise a disc-shaped steel mounting plate 55a, 55b, via which mounting plates 55a, 55b the air bellows 52a, 52b are fixedly connected to a cross beam 56, which extends between the rear ends of the longitudinal girders 6a, 6b.

On the side of the air bellows 52a, 52b remote from the mounting plates 55a, 55b, coupling rods 57a, 57b are pivotally connected to the associated pot bodies 53a, 53b about vertical pivot axes 81 a, 81 b. At their free ends, the coupling rods 57a, 57b are provided with slotted holes 58a, 58b.

The drawbar disc 59, which does not have a stop edge such as the stop edge 16 of the drawbar disc 12, is provided with two pivot pins 60a, 60b, which extend downwards from the drawbar disc 59 into the respective slotted holes 58a, 58b. In the neutral position, the pivot pins 60a, 60b are located at the end of the slotted holes 58a, 58b that faces towards the associated air bellows 52a, 52b. The connection between the coupling rods 57a, 57b and the drawbar disc 59 via the pivot pins 60a, 60b extending within the slotted holes 58a, 58b enables the coupling rods 57a, 57b to pivot about the central axes of the pivot pins 60a, 60b, respectively.

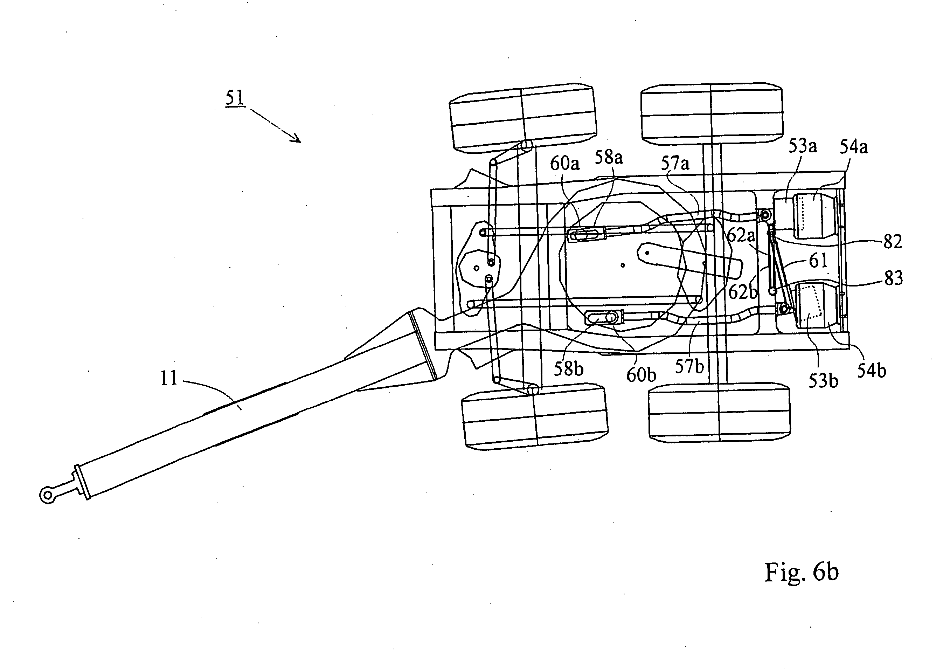

When taking a turn, as shown in figure 6b, the pivot pin 60a, 60b that is located on the outside bend side will move within the associated slotted holes 58a, 58b. The length of the slotted holes 58a, 58b has been selected so that in the case of a maximum travel of the drawbar member 11 the pivot pin 60a, 60b in question cannot reach or can just reach the opposite end of the slotted hole 58a, 58b. The pivot pin 60a, 60b in question will slightly move towards the centre of the dolly 51 upon pivoting of the drawbar disc 59, as a result of which the associated pot body 53a, 53b will move outwards to a very limited extent within the associated bellows body 54a, 54b, without influencing the pneumatic volume of the respective bellows body 54a, 54b to any significant extent.

The pivot pin 60a, 60b that is located on the inside bend side (in this case pivot pin 60b) will push the coupling rod 57b in the direction of the air bellows 52b, as a result of which the pot body 53b is pushed into the bellows body 54b at a slightly skewed angle. This causes the pneumatic volume of the bellows body 54b to decrease significantly, as a result of which the pressure in the air bellows 52b is increased and consequently an increased resistance develops to push the pivot pin 60b back again, so that the drawbar member 11 will assume its neutral position again. As is the case with the dolly 4, where only one cylinder 32a, 32b is operative when taking a turn to cause the dolly to return to the neutral position again, only one air bellows 52a, 52b of the dolly 51 is operative when taking a turn.

To control the movement of the pot bodies 53a, 53b, the dolly 51 is furthermore provided with guide rods. In the case of the pot body 53b this is the guide rod 61, which extends within the height of the longitudinal girder 6a, 6b and which is pivotally connected to the cross beam 7c about a vertical pivot axis 81. In the case of the pot body 53a it is the guide rods 62a, 62b, which are provided above and below the guide rod 61, respectively, and which are pivotally connected to the cross beam 7c about (aligned) vertical pivot axes 83. At the ends located opposite the pivot axes 82, 83, the guide rods 61, 62a, 62b are rigidly connected to the associated pot body 53a, 53b.

## Claims

1. A device (4) for coupling a towed vehicle (3) to a towing vehicle (2), comprising a frame (5), at least one wheel pair (8) for moving the device, the wheels of said at least one wheel pair being of the steering type, a drawbar assembly (10) which can be pivotally coupled to the towing vehicle about a first vertical pivot axis (15) on the one hand and which is pivotally connected to the frame about a second vertical pivot axis (17) on the other hand, as well as a coupling plate (19) for pivotally coupling the towed vehicle to the device about a third vertical pivot axis (21), in which device means are provided for causing the wheels of the steering type to be steered in dependence on the pivoted position of the drawbar assembly about the second vertical pivot axis with respect to the frame, **characterised in that** reset means (32a, 32b; 52a, 52b) are provided, which reset means act between the frame and the drawbar assembly and act directly on the drawbar assembly for causing the drawbar assembly to pivot back about the second vertical axis from a non-neutral position to a neutral position.

2. A device according to claim 1, **characterised in that** the reset means comprise at least one cylinder (32a, 32b).

3. A device according to claim 2, **characterised in that** the reset means comprise at least two cylinders acting in opposite directions.

4. A device according to claim 3, **characterised in that** only one of said at least two cylinders acts between the frame and the drawbar assembly in a non-neutral position.

5. A device according to any one of the preceding claims, **characterised in that** the reset means operate on the basis of pneumatic pressure.

6. A device according to any one of the preceding claims, **characterised in that** the reset means comprise an air bellows (52a, 52b)

7. A device according to any one of the preceding claims, **characterised in that** the reset means comprise at least one rod (57a, 57b) which is pivotally connected to the drawbar assembly by means of a pin-slot connection.

8. A device according to any one of the preceding claims. **characterised in that** locking means are provided for locking the drawbar assembly in the neutral position.

9. A device according to any one of the preceding claims, **characterised in that** the second vertical pivot axis and the third vertical pivot axis coincide.

10. A vehicle combination comprising a towing vehicle, a towed vehicle and a coupling device for coupling the towed vehicle to the towing vehicle, **characterised in that** said coupling device is configured as defined in any one of the preceding claims.

## Patentansprüche

1. Vorrichtung (4) zum Ankuppeln eines Anhängefahrzeugs (3) an eine Zugmaschine (2), mit einem Rahmen (5), wenigstens einem Räderpaar (8) zum Bewegen der Vorrichtung, wobei die Räder des wenigstens einen Räderpaares lenkende Räder sind, einer Zugstangenbaugruppe (10), die einerseits um eine erste vertikale Schwenkachse (15) schwenkbar an die Zugmaschine angekuppelt werden kann und andererseits um eine zweite vertikale Schwenkachse (17) schwenkbar mit dem Rahmen verbunden ist, sowie einer Kupplungsplatte (19), mit der das Anhängefahrzeug um eine dritte vertikale Schwenkachse (21) schwenkbar an die Vorrichtung angekuppelt ist, wobei bei der Vorrichtung Mittel vorgesehen sind, die bewirken, dass die lenkenden Räder je nach der Schwenkposition der Zugstangenbaugruppe um die zweite vertikale Schwenkachse bezüglich des Rahmens gelenkt werden, **dadurch gekennzeichnet, dass** Rückstellmittel (32a, 32b; 52a, 52b) vorgesehen sind, die zwischen dem Rahmen und der Zugstangenbaugruppe wirken und unmittelbar auf die Zugstangenbaugruppe wirken, um zu bewirken, dass die Zugstangenbaugruppe um die zweite vertikale Achse aus einer nicht neutralen Stellung in eine neutrale Stellung zurückschwenkt.

2. Vorrichtung nach Anspruch 1, **dadurch gekennzeichnet, dass** die Rückstellmittel wenigstens einen Zylinder (32a, 32b) umfassen.

3. Vorrichtung nach Anspruch 2, **dadurch gekennzeichnet, dass** die Rückstellmittel wenigstens zwei Zylinder umfassen, die in entgegengesetzte Richtungen wirken.

4. Vorrichtung nach Anspruch 3, **dadurch gekennzeichnet, dass** nur einer der wenigstens zwei Zylinder in einer nicht neutralen Stellung zwischen dem Rahmen und der Zugstangenbaugruppe wirkt.

5. Vorrichtung nach einem der vorhergehenden Ansprüche, **dadurch gekennzeichnet, dass** die Rückstellmittel auf der Grundlage von pneumatischem Druck arbeiten.

6. Vorrichtung nach einem der vorhergehenden Ansprüche, **dadurch gekennzeichnet, dass** die Rückstellmittel einen Luftbalg (52a, 52b) umfassen.

7. Vorrichtung nach einem der vorhergehenden Ansprüche, **dadurch gekennzeichnet, dass** die Rückstellmittel wenigstens eine Stange (57a, 57b) umfassen, die über eine Stift/Schlitz-Verbindung schwenkbar mit der Zugstangenbaugruppe verbunden ist.

8. Vorrichtung nach einem der vorhergehenden Ansprüche, **dadurch gekennzeichnet, dass** Sicherungsmittel zur Sicherung der Zugstangenbaugruppe in der neutralen Stellung vorgesehen sind.

9. Vorrichtung nach einem der vorhergehenden Ansprüche, **dadurch gekennzeichnet, dass** die zweite vertikale Schwenkachse und die dritte vertikale Schwenkachse zusammenfallen.

10. Fahrzeugkombination mit einer Zugmaschine, einem Anhängefahrzeug und einer Kupplungsvorrichtung zum Ankuppeln des Anhängefahrzeugs an die Zugmaschine, **dadurch gekennzeichnet, dass** die Kupplungsvorrichtung gemäß einem der vorhergehenden Ansprüche ausgeführt ist.

## Revendications

1. Dispositif (4) pour coupler un véhicule remorqué (3) à un véhicule de remorquage (2) comprenant un châssis (5), au moins une paire de roues (8) pour déplacer le dispositif, les roues de ladite au moins une paire de roues étant des roues motrices, un ensemble de barre de traction (10) qui peut être raccordé en pivotement au véhicule de remorquage autour d'un premier axe de pivot vertical (15) d'une part et qui est raccordé en pivotement au châssis autour d'un second axe de pivot vertical (17), d'autre part, ainsi qu'une plaque de couplage (19) pour raccorder en pivotement le véhicule remorqué au dispositif autour d'un troisième axe de pivot vertical (21), dans lequel un dispositif est fourni pour permettre aux roues de type motrice d'être dirigées selon la position pivotée de l'ensemble de barre de traction, autour du second axe de pivot vertical relativement au châssis, **caractérisé en ce que** des moyens de réinitialisation (32a, 32b ; 52a ; 52b) sont fournis, lesdits moyens de réinitialisation agissant entre le châssis et l'ensemble de barre de traction et agissant directement sur l'ensemble de barre de traction, pour faire pivoter l'ensemble de barre de traction de nouveau autour du second axe vertical d'une position non-neutre à une position neutre.

2. Dispositif selon la revendication 1, **caractérisé en ce que** les moyens de réinitialisation comprennent au moins un cylindre (32a, 32b).

3. Dispositif selon la revendication 2, **caractérisé en ce que** les moyens de réinitialisation comprennent au moins deux cylindres agissant dans des directions opposées.

4. Dispositif selon la revendication 3, **caractérisé en ce que** seulement un desdits au moins deux cylindres agit entre le châssis et l'ensemble de barre de traction dans une position non-neutre.

5. Dispositif selon l'une quelconque des revendications précédentes, **caractérisé en ce que** les moyens de réinitialisation fonctionnent sur la base de la pression pneumatique.

6. Dispositif selon l'une quelconque des revendications précédentes, **caractérisé en ce que** les moyens de réinitialisation comprennent un soufflet à air (52a, 52b).

7. Dispositif selon l'une quelconque des revendications précédentes, **caractérisé en ce que** les moyens de réinitialisation comprennent au moins une tige (57a, 57b) qui est raccordée en pivotement à l'ensemble de barre de traction au moyen d'une connexion broche-fente.

8. Dispositif selon l'une quelconque des revendications précédentes, **caractérisé en ce que** les moyens de verrouillage sont fournis pour verrouiller l'ensemble de barre de traction dans la position neutre.

9. Dispositif selon l'une quelconque des revendications précédentes, **caractérisé en ce que** le second axe de pivot vertical et le troisième axe de pivot vertical coïncident.

10. Combinaison de véhicules comprenant un véhicule de remorquage, un véhicule remorqué et un dispositif de couplage pour coupler le véhicule remorqué au véhicule de remorquage, **caractérisée en ce que** ledit dispositif de couplage est configuré comme défini dans l'une quelconque des revendications précédentes.
